**Europäisches Patentamt**

**European Patent Office**

**Office européen des brevets**

(11) Veröffentlichungsnummer: **0 162 288**
**B1**

(12) **EUROPÄISCHE PATENTSCHRIFT**

(45) Veröffentlichungstag der Patentschrift: **03.10.90**

(51) Int. Cl.⁵: **B 23 H 7/08**

(21) Anmeldenummer: **85104664.9**

(22) Anmeldetag: **17.04.85**

(54) **Verfahren zum funkenerosiven Drahtschneiden.**

(30) Priorität: **21.04.84 DE 3415055**

(43) Veröffentlichungstag der Anmeldung:
**27.11.85 Patentblatt 85/48**

(45) Bekanntmachung des Hinweises auf die
Patenterteilung:
**03.10.90 Patentblatt 90/40**

(84) Benannte Vertragsstaaten:
**AT BE CH DE FR GB IT LI NL SE**

(56) Entgegenhaltungen:
**FR-A-2 477 452**
**GB-A-2 087 778**

(73) Patentinhaber: **Berkenhoff GmbH**
**Eduard-Berkenhoff-Strasse 14**
**D-6301 Heuchelheim-Kinzenbach (DE)**

(72) Erfinder: **Groos, Heinrich**
**Hainstrasse 20**
**D-6348 Herborn (DE)**

(74) Vertreter: **Missling, Arne, Dipl.-Ing. et al**
**Patentanwälte Dipl.-Ing. R. Schlee Dipl.-Ing. A.**
**Missling Bismarckstrasse 43**
**D-6300 Giessen (DE)**

Courier Press, Leamington Spa, England.

**Beschreibung**

Die Erfindung betrifft ein Verfahren zum elektroerosiven Drahtschneiden.

Aus der DE—A—31 45 907 ist ein Verfahren der vorstehend genannten Art bekannt, bei dem eine Drahtelektrode verwendet wird, bei der die Oberfläche mit Vorsprüngen und Vertiefungen versehen ist. Diese unebene Oberfläche wird entweder durch Sandblasen oder Riefeln erhalten, oder aber auch dadurch, daß der Draht durch eine rotierende Matrizenform gezogen wird. Darüberhinaus ist es aus dieser Druckschrift bekannt, die Oberfläche durch Ätzen oder Beschichtungen mit Pulvern rauh zu gestalten. Eine besonders vorteilhafte Lösung wird darin gesehen, mehrere Drähte miteinander zu verflechten oder aber auf einen dickeren Trägerdraht einen dünneren Draht aufzuwickeln. Die Erzeugung einer mit Vertiefungen versehenen Oberfläche mittels einer rotierenden Matrizenform ist aus wirtschaftlichen Gründen nicht durchführbar, da der Draht mit einer relativ langsamen Geschwindigkeit vorgeschoben werden müßte, während die Matrizenform extrem schnell gedreht werden müßte. Was die übrigen Verfahren zur Verformung der Oberfläche eines Erodierdrahtes betrifft, so erhält man mit dem Riefeln und dem Sandstrahlen nur unregelmäßige Oberflächen, die in der Regel nicht so gut geeignet sind, das im Schneidspalt angefallene erodierte Material aus diesem abzutransportieren. Was das Aufwickeln eines dünnen Drahtes auf eine dicke Trägerseele betrifft, wie auch das Verdrillen mehrerer dünner Drähte miteinander, so besteht hier zum einen der Nachteil, daß dieses Verfahren aus wirtschaftlicher Sicht relativ aufwendig ist, zumal hier die dünnen Drähte einen erheblich geringeren Durchmesser aufweisen müssen als der Durchmesser des Erodierdrahtes. Die Herstellung der dünnen Drähte ist jedoch sehr aufwendig und teuer. Darüberhinaus ist auch das Verseilen der Drähte miteinander wie auch das Aufwickeln eines dünnen Drahtes auf eine dickere Seele relativ aufwendig. Der Hauptnachteil macht sich jedoch beim Erodieren bemerkbar. Die dünnen Drähte neigen dazu, zuerst durchzubrennen, was zur Folge hat, daß die Enden sich abspreizen und unmittelbar zur Anlage an dem zu schneidenden Werkstück gelangen. Die Folge ist, daß der Erodierdraht am zu schneidenden Werkstück festbrennt und somit der Schneidvorgang unterbrochen ist. Der Erodierdraht muß dann erneut erst wieder eingefädelt und der Schneidvorgang von neuem gestartet werden.

Aus der FR—A—2 477 452 ist eine Drahtelektrode für das funkenerosive Schneiden bekannt, die einen mehreckigen Querschnitt aufweist. Der vieleckige Querschnitt der Drahtelektrode dient dazu, Ecken exakt schneiden zu können. Jede Längskante des Drahtes verläuft parallel zur Drahtachse, was die Voraussetzung ist, ein Werkstück an den Ecken mit großer Genauigkeit zu bearbeiten.

Der Erfindung liegt die Aufgabe zugrunde, ein Verfahren zum funkenerosiven Drahtschneiden bereit zu stellen, bei dem das erodierte Material schnell und sicher aus dem Schneidspalt entfernt wird und bei dem die Drahtelektrode trotzdem weiterhin eine hohe Festigkeit und eine gute elektrische Leitfähigkeit aufweist.

Diese Aufgabe wird mit den Merkmalen des kennzeichnenden Teiles des Anspruches 1 gelöst.

Ein entsprechend ausgebildeter Erodierdraht wird somit aus einem Draht hergestellt, der einen vieleckigen Querschnitt aufweist. Dieser Querschnitt kann dreieckförmig oder aber auch quadratisch oder rechteckförmig ausgebildet sein. Es ist auch denkbar, einen Querschnitt zu verwenden, der mehr als vier Ecken aufweist. Diese Querschnittsform des Erodierdrahtes kann in einfacher Weise durch Walzen eines runden Drahtes erhalten werden. Im Anschluß hieran wird der Draht in sich verdreht, so daß die Ecken des Drahtes schraubenförmig auf diesem entlanglaufen. Am vorteilhaftesten im Hinblick auf einen großen Hohlraum im Innern der Umfangsfläche des Drahtes hat sich ein rechteckförmiger Draht herausgestellt. Der Erodierdraht behält somit seinen vollen Querschnitt bei, so daß dessen Festigkeit wie auch elektrisches Leitvermögen durch die Erstellung einer unebenen Oberfläche nicht beeinträchtigt wird. Darüberhinaus hat sich die schraubenförmige Verformung des Drahtes als äußerst wirksam für die Herausführung des erodierten Materials aus dem Schneidspalt erwiesen, so daß die Schneidleistung wesentlich gesteigert werden konnte. Darüberhinaus weist die Drahtelektrode allseitig eine gleiche Flexibilität auf, was Voraussetzung für eine gleichbleibende Schnittleistung ist.

Die Drahteleketrode arbeitet somit nach dem Prinzip der sogenannten Förderschnecke und transportiert das mit Abtragspartikeln stark durchsetzte Dielektrikum mit der Drahtelektrodenlaufgeschwindigkeit aus dem schmalen Bearbeitungsspalt.

Die seitlichen Freiräume und die Oberflächenvergrößerung der Drahtelektrode lassen ein schnelles Abfließen der Abtragspartikel zu und fördern immer ungebrauchte Dielektrikum-Flüssigkeit dem Spalt zu. Somit werden die Spülvorgänge enorm verstärkt und sehr viel höhere Abtragsraten erreicht.

Außerdem gewinnt die Drahtelektrode durch die Profilgebung an Eigenstabilität, die nicht zuletzt auch durch günstige Wasserdruckverhältnisse im Bearbeitungsspalt zu einer geringeren Bauchigkeit der Erodierfläche des Werkstückes führt.

Ein Anwendungsbeispiel ist im folgenden anhand der Zeichnung näher beschrieben, in dieser zeigen:

Fig. 1 in schematischer Darstellung eine Drahtelektrode beim Schneiden eines Werkstückes,

Fig. 2 einen Ausschnitt aus Fig. 1 in vergrößerter Darstellung, mit teilweise weggebrochenem Werkstück und

Fig. 3 unterschiedliche Querschnitte einer erfindungsgemäß ausgebildeten Drahtelektrode.

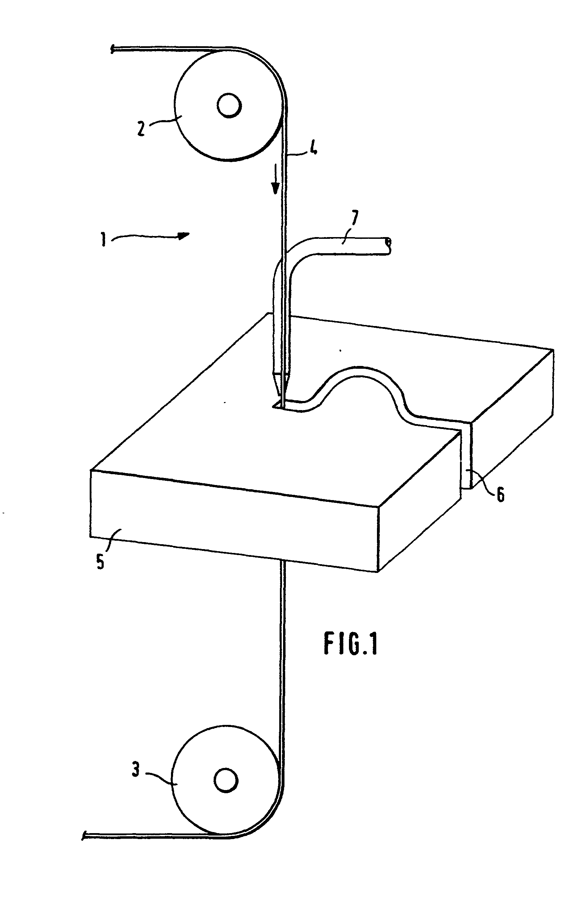

Die in Fig. 1 gezeigte Schneideinrichtung 1 besteht aus zwei Umlenkrollen 2, 3, über die die Drahtelektrode 4 geführt ist.

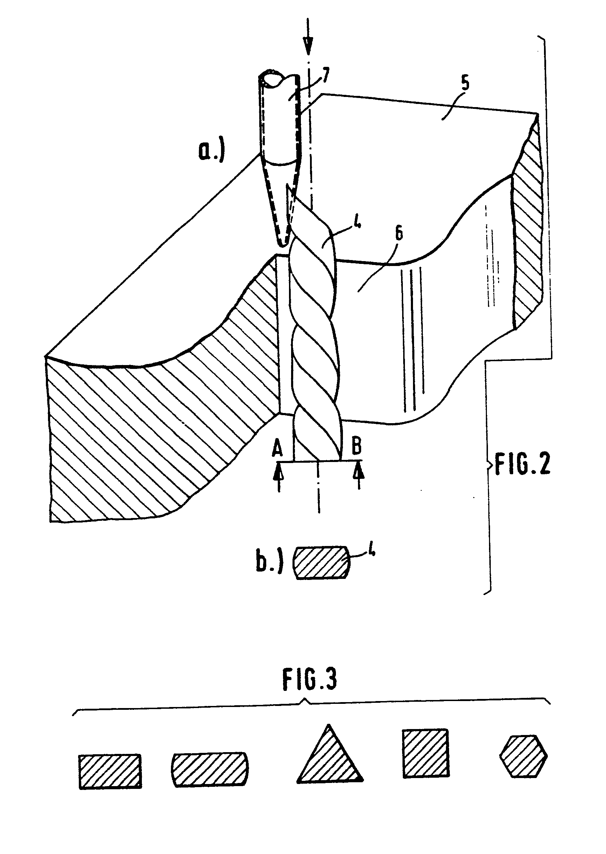

Mit der Drahtelektrode 4 wird ein Werkstück 5 geschnitten, wobei die Schnittfuge mit 6 bezeichnet ist. Parallel zur Drahtelektrode 4 wird über eine Zuleitung 7 eine Bearbeitungsflüssigkeit zugeführt, die dielektrischer Natur ist bzw. aus einem Elektrolyten geeigneter Leitfähigkeit besteht. Mit Hilfe der Bearbeitungsflüssigkeit wird die Schnittfuge 6 sowie der sich zwischen der Drahtelektrode und dem Werkstück ausbildende Bearbeitungsspalt gespült. Dieser Bearbeitungsspalt weist nur sehr geringe Abmessungen auf, die zwischen 0,01 und 0,05 mm liegen. Zur Verhinderung, daß sich im Bearbeitungsspalt Abtragspartikel trotz intensiver Spritzdüsenspülung anhäufen, wird erfindungsgemäß die Drahtelektrode aus einem Draht hergestellt, der die aus der Fig. 3 ersichtlichen Querschnittsformen aufweisen kann. Hierdurch ist sichergestellt, daß die Abtragspartikel zum einen durch die Fortbewegung des Drahtes nach unten und auch teilweise am Draht vorbei nach hinten abgeführt werden, was zu einer wesentlichen Steigerung der Schnittleistung führt.

Als Querschnitt für eine Drahtelektrode kann eine quadratische, dreiecksförmige oder rechteckförmige Form gewählt werden, wobei auch eine vieleckige Form denkbar ist. Dieser Draht wird verdrillt, so daß sich die Kanten schraubenförmig längs des Drahtes erstrecken. Man erhält hierdurch eine Art Förderschraube, die besonders vorteilhafte Eigenschaften im Hinblick auf den Abtransport der Abtragspartikel hat.

Die Herstellung eines derartigen Drahtes kann aus einem runden Draht erfolgen, der vorteilhaft zu einem rechteckförmigen Querschnitt gewalzt wird und anschließend in einer Drilleinrichtung verdrillt wird, so daß sich die Kanten schraubenförmig längs der Drahtseele erstrecken. Je nach dem Ausmaß der Verdrillung des Drahtes kann dieser mit einer größeren oder kleineren Steigung ausgebildet werden.

## Patentansprüche

1. Verfahren zum elektroerosiven Drahtschneiden, dadurch gekennzeichnet, daß als Drahtelektrode ein im Querschnitt mehreckiger um seine Längsachse verdrillter Draht verwendet wird.

2. Verfahren nach Anspruch 1, dadurch gekennzeichnet, daß der Draht einen rechteckförmigen Querschnitt aufweist.

3. Verfahren nach Anspruch 1, dadurch gekennzeichnet, daß der Draht einen quadratischen Querschnitt aufweist.

4. Verfahren nach Anspruch 1, dadurch gekennzeichnet, daß der Draht einen dreiecksförmigen Querschnitt aufweist.

5. Verfahren nach Anspruch 1, dadurch gekennzeichnet, daß der Draht einen fünf- oder mehreckigen Querschnitt aufweist.

## Revendications

1. Procédé de découpage par électroérosion avec fil, caractérisé en ce qu'on utilise comme fil-électrode, un fil de section transversale polygonale, torsadé autour de son axe longitudinal.

2. Procédé selon la revendication 1, caractérisé en ce que le fil présente une section transversale rectangulaire.

3. Procédé selon la revendication 1, caractérisé en ce que le fil présente une section transversale carrée.

4. Procédé selon la revendication 1, caractérisé en ce que le fil présente une section transversale triangulaire.

5. Procédé selon la revendication 1, caractérisé en ce que le fil présente une section transversale à cinq côtés ou davantage.

## Claims

1. Method of electro-erosive wire cutting, characterized in that, as wire electrode, there is used a wire which is polygonal in cross-section and twisted about its longitudinal axis.

2. Method according to claim 1, characterised in that the wire has a rectangular cross-section.

3. Method according to claim 1, characterised in that the wire has a square cross-section.

4. Method according to claim 1, characterised in that the wire has a triangular cross-section.

5. Method according to claim 1, characterised in that the wire has a pentagonal or polygonal cross-section.

FIG.1

a.)

FIG.2

b.)

FIG.3